# EUROPÄISCHE PATENTSCHRIFT

(11) **EP 0 788 581 B1**
(45) Veröffentlichungstag und Bekanntmachung des Hinweises auf die Patenterteilung: **02.02.2000**
(21) Anmeldenummer: 95933320.4
(22) Anmeldetag: 07.10.1995
(51) Int. Cl.: F02D 41/26, F02D 41/22, F02D 11/10, G06F 11/00

(54) **VERFAHREN UND VORRICHTUNG ZUR STEUERUNG DER ANTRIEBSEINHEIT EINES FAHRZEUGS**
PROCESS AND DEVICE FOR CONTROLLING THE DRIVE UNIT OF A VEHICLE
PROCEDE ET DISPOSITIF DE COMMANDE DE L'UNITE D'ENTRAINEMENT D'UN VEHICULE

(30) Priorität: 29.10.1994 DE 4438714
(43) Veröffentlichungstag der Anmeldung: 13.08.1997
(73) Patentinhaber: ROBERT BOSCH GMBH, 70442 Stuttgart (DE)
(72) Erfinder: BEDERNA, Frank, D-70825 Korntal-Münchingen (DE); ZELLER, Thomas, D-71254 Ditzingen (DE)
(86) Internationale Anmeldenummer: DE9501376
(87) Internationale Veröffentlichungsnummer: WO9613657

(56) Entgegenhaltungen:
- EP-A- 0 121 937
- EP-A- 0 212 682
- EP-A- 0 231 155
- DE-A- 3 726 489
- DE-A- 4 219 457
- DE-A- 4 302 483

## Beschreibung

### Stand der Technik

Die Erfindung betrifft ein Verfahren und eine Vorrichtung zur Steuerung der Antriebseinheit eines Fahrzeugs (vergl. DE-A-4 219 457).

Ein Steuerverfahren bzw. eine Steuervorrichtung ist aus der DE-A 42 20 247 bekannt. Dort ist zur Steuerung der Antriebseinheit ein erster Mikroprozessor bzw. -computer vorgesehen, welcher im bevorzugten Ausführungsbeispiel Berechnungen zur Kraftstoffzumessung, Zündzeitpunktseinstellung und zur Steuerung der Luftzufuhr zur Brennkraftmaschine in Abhängigkeit des Fahrerwunsches durchführt. Da dieses Rechenelement vor allem durch die Berechnung der Luftzufuhr die Möglichkeit besitzt, die Leistung der Brennkraftmaschine zu erhöhen, ist zur Überwachung der korrekten Funktion dieses Rechenelements ein zweites Rechenelement vorgesehen. Dieses überwacht die Funktionsweise des ersten Rechenelements und schaltet im Fehlerfall die Leistungssteuerung durch das erste Rechenelement ab oder leitet einen Notlaufbetrieb ein. Im bevorzugten Ausführungsbeispiel wird die Überwachung der Funktionsweise des ersten Rechenelements durch einen Vergleich des Fahrerwunsches mit der Stellung des die Luftzufuhr beeinflussenden Elements durchgeführt.

Dieses bekannte System gewährleistet zwar einen sicheren Betrieb einer Antriebseinheit mit hoher Verfügbarkeit, ist allerdings durch das zweite Rechenelement mit großen Aufwand und damit Kosten verbunden, so daß diese Lösung für andere Ausführungsbeispiele unbefriedigend sein kann.

Es ist daher Aufgabe der Erfindung, ein Verfahren und eine Vorrichtung zur Steuerung der Antriebseinheit eines Fahrzeugs zu schaffen, welche bei hoher Verfügbarkeit und Betriebssicherheit einen deutlich geringeren Aufwand benötigen.

Dies wird erreicht mit den Merkmalen gemäß Anspruch 1 bzw. 8

Dadurch wird erreicht, daß lediglich ein Rechenelement (handelsüblicher Mikroprozessor bzw. -computer) vorgesehen ist, welches sowohl die Funktionen bzw. Berechnungen zur Leistungssteuerung als auch deren Überwachung durchführt. Betriebssicherheit und Verfügbarkeit werden dabei dadurch gewährleistet, daß zur Durchführung dieser Aufgaben wenigstens zwei, voneinander zumindest außerhalb des Fehlerfalls unabhängige Ebenen in dem einzigen Rechenelement vorgesehen sind, wobei in einer ersten Ebene die Funktionen zur Leistungssteuerung berechnet und in einer zweiten Ebene, ggf. in Zusammenarbeit mit einem Watch-Dog, diese Funktionen und somit die Funktionsfähigkeit des Rechenelements selbst überwacht wird.

Aus der DE-A 41 14 999 ist ein Steuersystem für ein Fahrzeug mit einem Mikrorechner und einem Überwachungsmodul, welches vorzugsweise als Gate-Array ausgeführt ist, bekannt, welches eine Ablaufkontrolle des Mikrorechners durchführt. Dazu verarbeiten beide im Rahmen eines Frage-Antwort-Spiels Signalwerte, wobei das Überwachungsmodul durch Vergleich der Ergebnisse dieser Verarbeitung auf das korrekte oder fehlerhafte Arbeiten des Mikrorechners schließt. Durch diese Ablaufkontrolle mittels einer einfach aufgebauten Überwachungseinrichtung läßt sich der Aufwand für ein solches Steuersystem zwar erheblich reduzieren, eine vollständige Überwachung der vom Mikrorechner berechneten Funktionen kann dadurch jedoch nicht erfolgen.

### Vorteile der Erfindung

Die erfindungsgemäße Vorgehensweise führt zu einer Steuereinheit zur Steuerung der Antriebseinheit eines Fahrzeugs, welche einen wesentlich geringeren Aufwand erfordert und somit kostengünstiger ist. Dabei wird insbesondere die Anzahl der Bauelemente eingeschränkt, so daß eine geringere Ausfallwahrscheinlichkeit und auch eine geringere Fehleranfälligkeit des Systems erreicht wird. Besondere Vorteile ergeben sich durch die dritte Ebene, die gemäß Anspruch 1 bzw. 8 eine Ablaufkontrolle der zweiten Ebene durchführt. Diese Überwachung erhöht Betriebssicherheit und Verfügbarkeit erheblich. Dabei ist es von Vorteil einen aktiven Watch-Dog zu verwenden, der die Ablaufkontrolle als Frage-AntwortSpiel durchführt.

Besonders vorteilhaft ist, daß durch die Bereitstellung wenigstens zweier Ebenen, einer Funktions- und einer Überwachungsebene, zwei sich zumindest außerhalb des Fehlerfalls gegenseitig in ihrer Funktion nicht beeinflussende Kanäle innerhalb des Rechenelements geschaffen werden und so eine mit einem Steuersystem mit zwei Recheneinheiten vergleichbare Betriebssicherheit und Verfügbarkeit erreicht wird.

Dabei ist von besonderer Bedeutung, daß das aus nur einem Rechenelement bestehende Steuersystem leichter an verschiedene Randbedingungen angepaßt werden kann, da die einzelne (Programm-)Module getrennt voneinander behandelt werden können.

Weitere Vorteile ergeben sich im Rahmen der folgenden Beschreibung von Ausführungsbeispielen bzw. aus den abhängigen Patentansprüchen.

### Zeichnung

Die Erfindung wird nachstehend anhand der in der Zeichnung dargestellten Ausführungsformen näher erläutert. Dabei zeigt Figur 1 ein Übersichtsblockschaltbild des erfindungsgemäßen Steuersytems, während in Figur 2 eine detailliertere Darstellung in Form eines Blockschaltbildes dargestellt ist. Figur 3 schließlich zeigt eine bevorzugte Ausführung der erfindungsgemäßen Vorgehensweise.

### Beschreibung von Ausführungsbeispielen

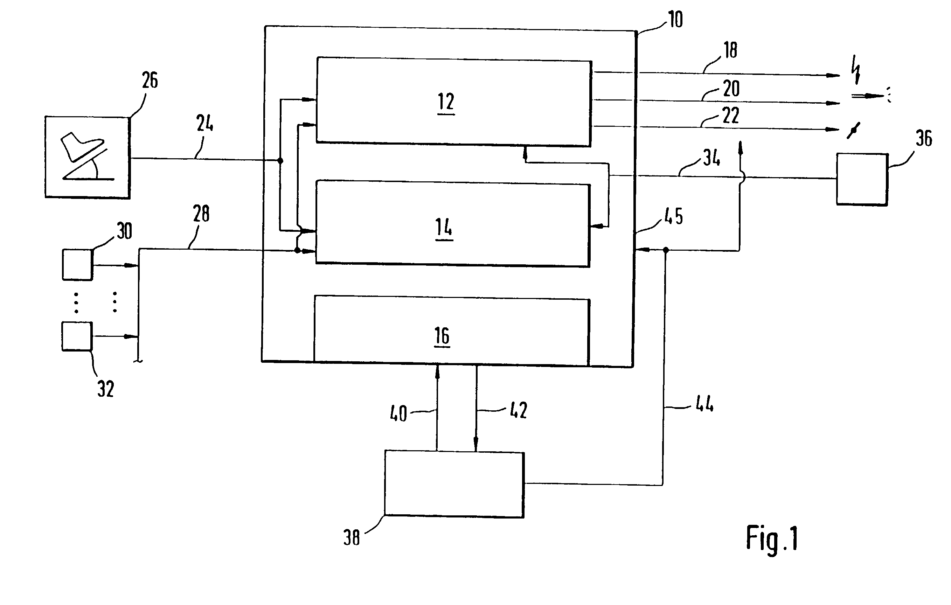

In Figur 1 ist ein Übersichtsblockschaltbild eines Steuersytems für die Leistung einer Brennkraftmaschine eines Fahrzeugs dargestellt. Dabei ist mit 10 ein handelsübliches Rechenelement, beispielsweise ein Mikrocomputer, dargestellt. Der Mikrocomputer 10 ist dabei in drei Ebenen organisiert Eine erste Ebene 12 führt die Berechnungen zur Durchführung der Leistungsteuerung durch, während eine zweite Ebene 14 diese Funktionsebene 12 überwacht. Eine dritte Ebene 16 schließlich bildet eine Kontrollebene, welche die Überwachungsebene 14 und damit den Mikrocomputer 10 selbst auf der Basis einer Ablaufkontrolle kontrolliert. Als Ausgangsleitungen weist der Mikrocomputer 10 eine Ausgangsleitung 18 zur Steuerung des Zündzeitpunkts, eine Ausgangsleitung 20 zur Steuerung der Kraftstoffzumessung und eine Ausgangsleitung 22 zur Steuerung der Luftzufuhr, vorzugsweise über eine elektrisch betätigbare Drosselklappe, auf. Die Ausgangsleitungen 18 bis 22 gehen dabei von der Funktionsebene 12 aus und werden von dieser angesteuert. Als Eingangsleitung ist eine Leitung 24 von einer Fahrerwunschmeßeinrichtung 26, vorzugsweise einem Stellungserfassungsorgan für die Stellung eines vom Fahrer betätigbaren Bedienelements, z.B. eines Fahrpedals, vorgesehen, die der Funktionsebene 12 und der Überwachungsebene 14 zugeführt ist. Eine weitere Eingangsleitung bildet die Leitung 28, welche die Funktions- und die Überwachungsebene des Mikrocomputers 10 mit den Meßeinrichtungen 30 bis 32 verbindet. Diese erfassen Betriebsgrößen der Brennkraftmaschine und/oder des Kraftfahrzeugs. In einem bevorzugten Ausführungsbeispiel stellt die Eingangsleitung 28 ein Bussystem, z.B. CAN, dar. Eine weitere Eingangsleitung ist die Leitung 34, welche auf die Funktions- und die Überwachungsebene geführt ist und welche den Mikrocomputer mit einer Meßeinrichtung 36 zur Erfassung der Luftzufuhr, vorzugsweise der Stellung der elektrisch betätigbaren Drosselklappe, verbindet. Ferner ist ein Watch-Dog 38 vorgesehen, welcher über die Leitungen 40 und 42 mit dem Mikrocomputer 10, dort mit der Kontrollebene 16, kommuniziert. Eine Ausgangsleitung 44 des Watch-Dogs führt auf den Rücksetzeingang 45 des Mikrocomputers 10 und beispielsweise auf die Endstufen für die Luftzufuhreinstellung bzw. die Kraftstoffzumessung zum Stillsetzen der Antriebseinheit im Fehlerfall.

In der Funktionsebene wird im bevorzugten Ausführungsbeispiel wie bekannt wenigstens auf der Basis von Motordrehzahl und Motorlast, deren Meßwerte über das Bussystem 28 zugeführt werden, aus vorbestimmten und gespeicherten Kennfeldern die zuzumessende Kraftstoffmenge und der einzustellende Zündzeitpunkt bestimmt und ausgegeben. Ferner wird auf der Basis des über die Leitung 24 zugeführten Fahrerwunsches ein Sollwert für die Luftzufuhr, im bevorzugten Ausführungsbeispiel für die Stellung der Drosselklappe der Brennkraftmaschine, bestimmt. Dieser Sollwert wird unter Vergleich mit dem von der Meßeinrichtung 36 und über die Leitung 34 zugeführten Istwert, vorzugsweise der Iststellung der Drosselklappe, im Rahmen eines Regelkreises von einem digitalen Regler, im Falle der Regelung der Drosselklappenstellung ein Lageregler, eingeregelt. Die Funktionsebene 12 übernimmt dabei wie aus dem Stand der Technik bekannt die Steuerung der Leistung der Brennkraftmaschine abhängig von dem durch die Stellung des Bedienelements vom Fahrer vorgegebenen Fahrerwunsch.

Im bevorzugten Ausführungsbeispiel eines Systems mit elektrischer Beeinflussung der Luftzufuhr können Fehlerzustände direkt durch Vergleich der Ausgangsgröße des Systems (Luftzufuhr, Drosselklappenwinkel) mit der Eingangsgröße (Fahrerwunsch) erkannt werden. Die Luftzufuhr bzw. der Drosselklappenwinkel darf in Betriebszuständen, in denen ausschließlich der Fahrerwusch die Leistung der Brennkraftmaschine steuert, nicht größer sein als die Fahrervorgabe. Diese für sich bekannte Überwachungsmaßnahme findet in der zweiten Ebene, der Überwachungsebene statt. Dazu werden dieser der Fahrerwunsch über die Leitung 24 und die Ausgangsgröße über die Leitung 34 zugeführt. Wird ein Fehlerzustand erkannt, führt dies in der Funktionsebene zu einem Notlaufbetrieb und/oder über die dritte Ebene und den Watch-Dog zur Leistungsbegrenzung. Die Kontrollebene umfaßt Maßnahmen zum Testen der Speicherelemente sowie eine Ablaufkontrolle, welche im Zusammenspiel mit dem Watch-Dog die korrekte Durchführung der Softwarefunktionen der zweiten Ebene überprüft und im Fehlerfall ggf. den Rechner zurücksetzt, die Leistungssteuerung unterbricht und/oder die Leistung der Brennkraftmaschine begrenzt.

Neben der dargestellten Ausführung findet in vorteilhafter Weise die Erfindung überall dort Anwendung, wo durch Vergleich der Ein- und Ausgangsgröße des Steuersystems Fehlerzustände abgeleitet werden können.

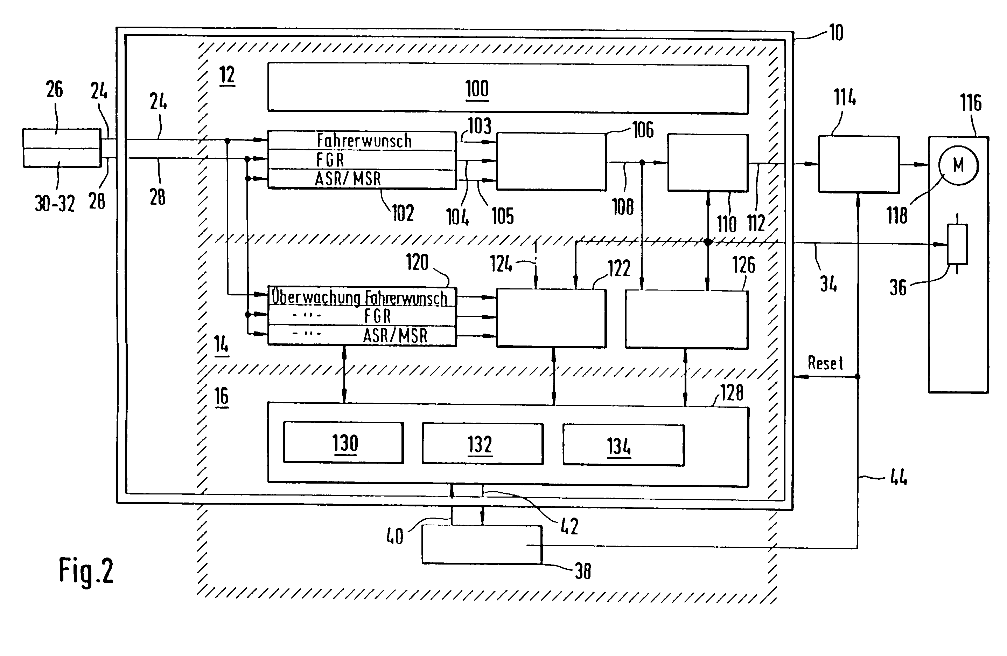

Figur 2 zeigt eine detailliertere Darstellung der drei Ebenen des Mikrocomputers im Rahmen des bevorzugten Ausführungsbeispiels der elektrischen Steuerung einer Drosselklappe einer Brennkraftmaschine. Dabei sind die bereits anhand von Figur 1 bezeichneten und beschriebenen Elemente im folgenden nicht mehr näher erläutert.

In der ersten Ebene, der Funktionsebene 12, umfaßt ein Funktionsblock 100 die Funktionen, welche Kraftstoffzumessung und Zündzeitpunktseinstellung bestimmen. In einem Funktionsblock 102 werden die über die Leitungen 24 und 28 zugeführten Signale eingelesen und ausgewertet. So wird der über die Leitung 24 zugeführte Stellungswert des Fahrpedals, Signale zur Fahrgeschwindigkeitsregelung (Signale vom Bedienelement, Bremsschalter, etc) und Eingriffe anderer Funktionen, wie eine Antriebsschlupfregelung (ASR), eine Motorschleppmomentregelung (MSR), die Getriebesteuerung, etc., die über das Bussystem 28 Vorgabewerte für Drosselklappeneinstellung zuführen, eingelesen und ausgewertet. Ferner werden auch Meßgrößen wie Motordrehzahl, Motortemperatur, etc. eingelesen. Die ausgewerteten Signale werden über die Leitungen 103, 104 und 105 an den Block 106 übertragen, in welchem aus den zugeführten Signalen der Sollstellungswert für die Drosselklappe berechnet wird. Dieser wird über die Ausgangsleitung 108 zum digitalen Lageregler 110 geführt. Im digitalen Lageregler 110 wird der Sollwert mit der über die Leitung 34 zugeführten Iststellung der Drosselklappe verglichen und ein Ansteuersignal für den elektrischen Motor, welcher die Drosselklappe betätigt, gebildet. Dieses wird über die Leitung 112 und die Endstufenschaltung 114 zum Drosselklappenstellelement 116 geführt. Dieses besteht aus einem Stellmotor 118, welcher die nicht dargestellte Drosselklappe betätigt, und wenigstens einem Stellungsgeber 36 für Drosselklappe. Entsprechend ist in der zweiten Ebene, der Überwachungsebene 14, ein Block 120 vorgesehen, in welchem der Fahrerwunsch, die Eingrifffe vom Fahrgeschwindigkeitsregler oder von den sonstigen Funktionen überprüft werden. Es wird festgestellt, ob das Fahrpedal losgelassen ist (durch Schwellenvergleich), das heißt ob der Fahrer Leerlaufleistung wünscht, ob der Fahrgeschwindigkeitsregler und/oder die sonstigen Eingriffe aktiv sind oder nicht. Diese Signale werden über die Leitungen 121, 123 bzw. 125 dem Block 122 übermittelt, in welchem der Fahrerwunsch mit der über die Leitung 34 zugeführte Drosselklappenstellung verglichen und auf Übereinstimmung geprüft wird. Alternativ kann zur Überwachung anstelle der Drosselklappestellung, wie strichliert angedeutet (Pfeil 124), ein Motorlastsignal für den Vergleich mit dem Fahrerwunsch herangezogen werden. Parallel zum Block 122 ist ein Block 126 vorgesehen, in welchem eine Überwachung der Lage der Drosselklappe vorgenommen wird, in dem der Drosselklappensollwert mit dem Drosselklappenistwert verglichen wird. Bleibt eine Abweichung bestehen, so ist von einer Fehlfunktion des Reglerbausteins 110 oder des Stellelements 116 auszugehen. Die einzelnen Funktionselemente der zweiten Ebene sind mit der Kontrollebene 16 verbunden. Dort ist ein Überwachungsblock 128 dargestellt, welcher die Elemente RAM-Test 130, ROM-Test 132 sowie Ablaufkontrolle 134 umfaßt. Durch diese Elemente wird, wie nachfolgend beschrieben, in Zusammenarbeit mit dem aktiven Watch-Dog 38 die korrekte Ausführung der Programmteile der zweiten Ebene überprüft. Wird hier ein Fehler festgestellt, setzt der Watch-Dog 38 über die Leitung 44 das Rechenelement 10 zurück und/oder schaltet die Endstufe 114 ab.

In einem bevorzugten Ausführungsbeispiel wird zur Überwachung des Fahrerwunsches dieser mittels zwei voneinander unabhängigen Meßeinrichtungen erfaßt. Dabei wird eine Meßeinrichtung als Sicherheitsmeßeinrichtung definiert und zur Überwachung des Fahrerwunsches im Block 120 mit einem vorgegebenen Schwellwert verglichen. Unterschreitet der Fahrerwunschwert den Schwellwert, so wird von einem Leerlaufwunsch des Fahrers ausgegangen. Zur Überwachung des Fahrgeschwindigkeitsreglers ist wie im eingangs genannten Stand der Technik vorgesehen, daß bei Bremsbetätigung, bei Unterschreiten einer minimalen Geschwindigkeitsbegrenzung oder bei Betätigen des Aus-Schalters der Fahrgeschwindigkeitsregler deaktiviert wird bzw. bei Betätigen eines Ein-Schalters der Fahrgeschwindigkeitsregler aktiviert wird. Dies wird dem Block 122 mitgeteilt, da in diesem Betriebszustand die im Block 122 vorgenommene Überwachung nicht durchgeführt werden kann bzw. in modifizierter Form durchgeführt wird. Entsprechend wird im Block 120 die ASR/MSR-Funktion anhand von entsprechenden Informationen festgestellt, ob diese Funktionen aktiv oder inaktiv sind. Eine entsprechende Mitteilung geht an den Block 122, da auch in diesem Fall die Überwachung nicht durchgeführt werden kann bzw. in modifizierter Form durchgeführt wird.

Zur Sicherstellung der korrekten Funktionsweise des Mikrocomputers 10 wird durch die dritte Ebene 16, die Kontrollebene, die korrekte Abarbeitung der in der zweiten Ebene 14 und ggf ergänzend in der dritten Ebene vorgesehenen Programmteile durch eine Ablaufkontrolle 134 überwacht. Dazu ist ein Watch-Dog 38 vorgesehen, der mittels des in der Ebene 16 des Mikrocomputers 10 vorgesehenen Programmteils 128 über die Leitungen 40 bzw. 42 kommuniziert. Die Ebene 16 umfaßt dabei Programmteile wie ein Testprogramm für den Schreib-/Lesespeicher 130, in dem in einem bevorzugten Ausführungsbeispiel vorbestimmte Speicher- und Leseaktionen durchgeführt werden und die korrekte Durchführung dieser Aktionen überprüft wird, ein Testprogramm 132 für den Lese-Speicher, wobei in einem bevorzugtem Ausführungsbeispiel vorgegebene Leseoperationen durchgeführt und überprüft werden, sowie die nachfolgend beschriebene Ablaufkontrolle 134. Zur Ablaufkontrolle sendet der Watch-Dog 38 über die Leitung 40 an den Mikrocomputer eine durch einen Zufallsgenerator ermittelte Frage, die im bevorzugten Ausführungsbeispiel aus einer Impulsfolge mit von dem Zufallsgenerator ausgewählten Impulslängen besteht. Das Ablaufkontrollprogramm 134 wertet diese Frage, das heißt dieses Impulssignal, aus und bestimmt die Programmteile bzw. die Programme, welche zur Beantwortung der vom Watch-Dog 38 gestellten Frage herangezogen werden. Dabei ist in einem bevorzugten Ausführungsbeispiel vorgesehen, daß alle Programmmodule (120, 122, 126, 130 und 132) bzw. Teile davon zur Überwachung herangezogen werden. Bei Aufruf bzw. Eintritt in die ausgewählten Programmmodule bzw. -teile wird ein erster Zähler der Ablaufkontrolle um einen vorgegebenen Betrag inkrementiert bzw. dekrementiert, beim Verlassen dieser ausgewählten Programmteile wird ein zweiter Zähler mit einem unterschiedlichen Betrag inkrementiert bzw. dekrementiert. Sind alle von der Ablaufkontrolle ausgewählten Programmmodule bzw. -teile abgearbeitet, ergibt sich ein Zählerstand des ersten und ein Zählerstand des zweiten Zählers, welcher von der Ablaufkontrolle 134 in ein Impulssignal umgesetzt wird, dessen Impulslängen diesen Zählerständen entsprechen. Dieses Impulssignal wird über die Leitung 42 an den Watch-Dog 38 gesendet, der diese Antwort des Mikrocomputers 10 mit seiner über die Leitung 40 gestellten Frage vergleicht. Erkennt der Watch-Dog 38 Abweichungen, geht er von einem Fehlerzustand des Mikrocomputers 10 aus und setzt diesen über die Leitung 44 zurück und schaltet ggf. die Endstufe 114 ab bzw. begrenzt die Leistung der Brennkraftmaschine. In einem bevorzugten Ausführungsbeispiel wird der erste Zähler immer um 1, der zweite Zähler immer um 2 inkrementiert.

Dabei sind zur Ablaufkontrolle eine nahezu beliebige Anzahl von Fragen/Antwort-Paaren denkbar. In einem bevorzugten Ausführungsbeispiel läßt sich der Aufwand im Watch-Dog 38 auf ein Minimum begrenzen, wenn lediglich zwei Fragen/AntwortPaare vorgesehen sind. Es hat sich gezeigt, daß die Begrenzung auf zwei Paare keine Einbußen hinsichtlich der Betriebssicherheit des Systems mit sich bringt.

Fig. 2 zeigt ein bevorzugtes Ausführungsbeispiel der Erfindung. Selbstverständlich läßt sich die Erfindung auch dann vorteilhaft einsetzen, wenn die Leistung auf elektrischem Wege lediglich durch einen Fahrgeschwindigkeitsregler (FGR), eine Kombination aus FGR und ASR und/oder MSR, mit oder ohne Getriebeeingriff gesteuert wird, oder wenn die fahrerwunschabhängige Einstellung der Drosselklappe mit einer oder mehrere dieser Funktionen kombiniert ist.

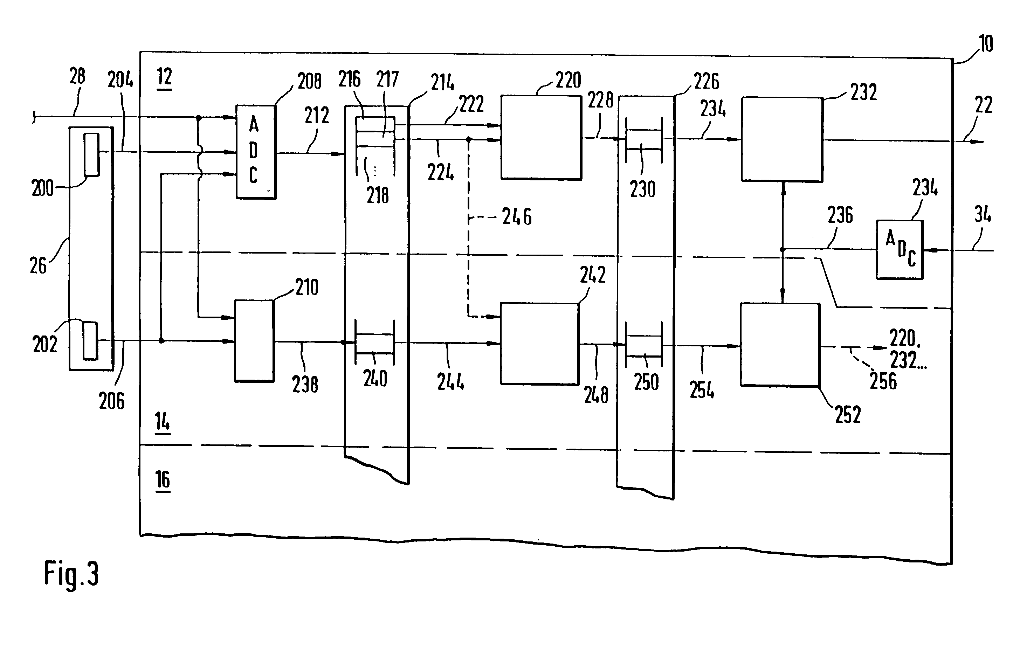

Ein bevorzugtes Ausführungsbeispiel der ersten und zweiten Ebene ist am Beispiel einer fahrerwunschabhängigen Steuerung der Drosselklappe einer Brennkraftmaschine in Figur 3 dargestellt. Dabei wurden die bereits in Figur 1 und 2 bezeichneten Elemente mit den gleichen Bezugszeichen versehen. Sie werden im folgenden nicht näher beschrieben. Im bevorzugten Ausführungsbeispiel sind zur Erfassung des Fahrerwunsches in der Meßeinrichtung 26 zwei Sensoren 200 und 202, vorzugsweise Potentiometer oder berührungslose Stellungsgeber, vorgesehen, deren Signalleitungen 204 bzw. 206 zum Mikrocomputer 10 geführt sind. Dabei führt die Leitung 204 des Sensors 200 zur Funktionsebene 12, dort zu einem Analog-/Digital-Wandler (ADC, 208). Die Signalleitung 206 des zweiten Sensors 202 führt einerseits auf diesen Wandler 208, andererseits zu einem Port-Eingang 210 des Mikrocomputers 10, welcher der zweiten Ebene 14 zugeordnet ist. Ferner werden Meßsignale über das Kommunikationssystem 28 dem Mikrocomputer 10 zugeführt. Das Kommunikationssystem 28 ist dabei sowohl an den Wandler 208 als auch an die Port-Eingänge 210 angeschlossen. Der Wandler 208 der Funktionsebene 12 ist über eine Leitung 212, welche Teil des internen Bussystems des Mikrocomputers 10 ist, mit einem Teil 214 des Speicherbausteins des Mikrocomputers 10 verbunden. Aus den im Speicherteil 214 symbolhaft eingezeichneten Speicherzellen 216, 217, 218 und weiteren liest das Programmodul 220 die vom Wandler 208 bzw. einer nicht dargestellten Software gespeicherten Werte aus. Dies ist symbolhaft durch die Leitungen 222 und 224 skizziert. Die Ergebnisse der Berechnungen speichert das Programmodul 220 in einem weiteren Teil 226 des Speicherbausteins. Diese Funktion ist in Figur 3 durch die Leitung 228 und die Speicherzelle 230 symbolisiert. Ein weiteres Programmodul 232 der Funktionsebene 12 arbeitet auf der Basis der vom Programmodul 220 berechneten und gespeicherten Werten. Dies ist durch die die Speicherzelle 230 und das Programmodul 232 verbindende Leitung 234 symbolisiert. Der vom Programmodul 232 berechnete Wert wird über die Leitung 22 vom Mikrocomputer 10 ausgegeben. Dem Mikrocomputer 10 ist ferner die Leitung 34, auf der ein die Stellung der Drosselklappe repräsentierender Meßwert zugeführt ist, zugeführt. Diese Leitung ist auf einen weiteren Analog-/Digital-Wandler 234 (oder vorzugsweise auf den Wandler 208) geführt, dessen Ausgangsleitung 236 ggf über einen weiteren Teil des Speichers zum Programmodul 232 geführt ist.

Der Überwachungsebene 14 sind die Port-Eingänge 210 des Mikrocomputers 10 zugeordnet. Diesen Port-Eingängen 210 wird das Kommunikationssystem 28 sowie die Leitung 206 vom Sensor 202 zugeführt. Diese Werte werden im Speicherteil 214 gespeichert, was in Figur 3 symbolhaft durch die Leitung 238 und das Speicherelement 240 dargestellt ist. Ein Programmodul 232 liest die über die Port-Eingänge 210 eingelesenen und im Speicherteil 214 der Überwachungsebene 14 gespeicherten Werte aus. Dies wird durch die Leitung 244 dargestellt. Ferner kann in einem bevorzugten Ausführungsbeispiel das Programmodul 214 eingelesene und gespeicherte Werte der Funktionsebene 12 auswerten. Dies ist durch die strichlierte Verbindungslinie 246 dargestellt. Die Berechnungsergebnisse des Programmoduls 242 werden im Speicherteil 226 in dem der Überwachungsebene 14 zugeordnetem Bereich gespeichert. Dies ist symbolisiert durch die Leitung 248 und das Speicherelement 250. Ein weiteres Programmodul 252 wertet die im Speicher gespeicherten Berechnungsergebnisse aus. Dies ist durch die Leitung 254 symbolisiert. Dem Programmodul 252 wird ferner die Leitung 236, die auch Teil des internen Bus-Systems des Mikrocomputers 10 ist, (ggf. über einen der Ebene 14 zugeordneten Speicherteil) zugeführt. Ausgangsleitung des Programmoduls 252 ist die strichlierte Leitung 256, die je nach Ausführung auf das Programmodul 220, das Programmodul 232 oder an nicht dargestellte Programmteile zur Berechnung von Zündwinkel oder Kraftstoffzumessung einwirkt. Ferner ist in Figur 3 die Ebene 16 skizziert, deren bevorzugte Ausgestaltung oben beschrieben wurde.

Dabei wurden in Figur 3 nur die wesentlichsten Elemente der bevorzugten Ausführungsform dargestellt. Auf Programmodule, welche technisch zur Verarbeitung und Speicherung der Meßwerte notwendig sind, wurde aus Übersichtlichkeitsgründen verzichtet. In Figur 3 sind lediglich die für die Funktion und Überwachung der elektrischen Steuerung der Drosselklappe notwendigen Elemente dargestellt.

Die Meßeinrichtung 26 bzw. die Sensoren 200 und 202 erfassen die Stellung eines vom Fahrer betätigbaren Bedienelements, im bevorzugten Ausführungsbeispiel des Fahrpedals. Die Meßwerte werden dem Mikrocomputers 10 zugeführt. Dabei wird in der Funktionsebene 12 die Meßsignale beider Sensoren dem Wandler 208 zugeführt. Dieser wandelt die analogen Spannungen in digitale Werte, die in Speicherzellen des Speichers des Mikrocomputers 10 abgelegt werden. Dabei ist wie in Figur 3 symbolhaft dem digitalen Meßsignal des Sensors 200 die Speicherzelle 216, den Meßwert des Sensors 202 die Speicherzelle 217 zugeordnet. In entsprechender Weise werden vom Analog-/Digital-Wandler 208 die über die Kommunikationsleitung 28 zugeführten Meßwerte gewandelt und im Speicherbaustein abgespeichert. Die gespeicherten Meßwerte ließt bei Aufruf das Programmodul 220 ein. In diesem Programmodul wird in bekannter Weise der Drosselklappenstellungssollwert gebildet. Dazu wird auf der Basis der beiden eingelesenen Meßwerte ein Vergleich dieser Meßwerte durchgeführt, um so Abweichungen zwischen den Meßwerten der beiden Sensoren festzustellen. Wurde keine Abweichung erkannt, wird auf der Basis des Meßwertes des Sensors 200, auf der Basis eines Mittelwertes und/oder auf der Basis des kleinsten Meßwertes aus einer Kennlinie der Drosselklappenstellungssollwert ausgelesen. Dabei können andere Betriebsgrößen, wie Motordrehzahl, Gangstellung, etc., die über die Leitung 28 zugeführt wurden, berücksichtigt werden. Das Berechnungsergebnis, der Drosselklappensollwert, wird gespeichert (Zelle 230). Neben der Berechnung des Drosselklappensollwerts findet im Programmodul 220 die Auswertung von weiteren Fahrervorgaben, wie beispielsweise das Signal eines Bedienhebels eines Fahrgeschwindigkeitsreglers oder Eingriffe von anderen Steuergeräten auf die Drosselklappensteuerung, wie beispielsweise einer Antriebsschlupfregelung, einer Motorschleppmomentenregelung oder einer Getriebesteuerung während des Schaltvorgangs statt. Ferner wird hier im Notlauf eine Begrenzung des Sollwertes durchgeführt. Durch Minimalwertauswahl wird der Drosselklappensollwert bestimmt. Dieser wird vom Programmodul 232, welches einen digitalen Lageregler für die Drosselklappe darstellt, ausgelesen, mit dem über die Leitung 236 zugeführten Drosselklappenstellungsistwert in Beziehung gesetzt und mittels einer vorgegebenen Regelstrategie, beispielsweise PID, in ein Ansteuersignal für die Drosselklappe umgerechnet. Dieses wird über die Leitung 22 ausgegeben und die Drosselklappe im Sinne einer Übereinstimmung zwischen Soll- und Istwert eingestellt.

Werden Abweichungen in den Sensorsignalen der Fahrpedalstellung erkannt, wird von einem Fehlerfall ausgegenagen und dier Sollwert begrenzt.

In der Überwachungsebene wird das Meßsignal des Sensors 202 den Port-Eingängen 210 des Mikrocomputers zugeführt. Dabei wird aus dem Meßsignal des Sensors 202 beispielsweise durch einen Komparator ein Schaltsignal abgeleitet, welches im Bereich des losgelassenen Fahrpedals seinen Spannungspegel wechselt. Dieses eingelesene Signal wird gespeichert und vom Programmteil 242 ausgewertet. Entsprechend werden zweiwertige Informationen bezüglich des Status der zusätzlichen Eingriffe auf die Drosselklappe und/oder bezüglich des Fahrgeschwindigkeitsreglers über die Eingänge 210 eingelesen und gespeichert. Auch diese werden vom Programmteil 242 ausgewertet. In einem bevorzugten Ausführungsbeispiel wird ferner ein Meßwert aus der Funktionsebene für die Fahrpedalstellung eingelesen. Dieser Meßwert kann beispielsweise der aus dem Meßsignal des Sensors 202 bestimmte sein. Ein Vergleich zwischen den beiden ermittelten Meßwerten kann Fehlerzustände erkennen oder im Falle, daß das Meßwertsignal des Sensors 200 ausgewertet wird im Fehlerfall des Sensors 202 die Verfügbarkeit des Systems sicherstellen. Durch Vergleich der eingelesenen Informationen bildet der Programmteil 242 einen Vergleichswert für die Fahrpedalstellung, der gespeichert wird. Dieser Vergleichswert, welcher ein Maß dafür gibt, ob der Fahrer einen Leerlaufwunsch vorgibt, wird vom Programmteil 252 mit der Information über die Stellung der Drosselklappe in Beziehung gesetzt. Bei Leerlaufwunsch darf dabei die Drosselklappe nicht über einen vorbestimmten Grenzwert geöffnet sein. Ist dies der Fall, wird ein Fehler erkannt und über die Leitung 256 der Sollwert für die Drosselklappenstellung begrenzt, die Endstufe für die Drosselklappenstellung abgeschaltet und/oder die Kraftstoffzumessung zumindest teilweise unterbrochen, etc. Sind fahrerwuschunabhängige Funktionen aktiv, wird die Überwachung ausgesetzt.

Zusammenfassend ist festzustellen, daß bei der erfindungsgemäßen Vorgehensweise sowohl die Berechnung der Steuerfunktionen als auch deren Überwachung in nur einem einzigen Mikrocomputer durchgeführt werden. Dazu ist wie oben ausgeführt, ein aktiver Watch-Dog vorgesehen, welcher mittels eines Frage-/Antwortspiels die Funktionsweise der Überwachungsmaßnahmen überprüft. Ferner sind wenigstens zwei Ebenen, eine Funktions- und eine Überwachungsebene, vorgesehen, welche im Mikrocomputer 10 voneinander getrennt ausgeführt sind und die sich außerhalb des Fehlerfalls gegenseitig nicht beeinflussen. Dabei ist vorgesehen, daß die von den beiden Ebenen ausgewerteten Informationen den Mikrocomputer auf zwei verschiedenen, voneinander unabhängigen Wegen zugeführt werden und intern durch unterschiedliche Programmteile unabhängig voneinander ausgewertet werden. Dadurch entstehen im Mikrocomputer zwei Kanäle, deren gegenseitige Unabhängigkeit der Verwendung von zwei Rechenelementen entsprechen.

Neben den dargestellten Ausführungsformen ist eine Vielzahl von Modifikationen der erfindungsgemäßen Vorgehensweise möglich. Beispielsweise kann in einem vorteilhaften Ausführungsbeispiel anstelle des einen Drosselklappenstellungssensors 2 vorgesehen sein, welche beide eingelesen und beide dem Programmteil 252 zugeführt werden. Ferner ist eine Überwachung der Einstellung der Drosselklappe durch Überwachung des Steuerstroms für den Motor bwz. des Ausgangssignals des Reglers, der im Fehlerfall einen Maximalwert überschreitet, vorgesehen. Auch derartige Überwachungsmaßnahmen sind bekannt.

Die erfindungsgemäße Vorgehensweise läßt sich auch auf Systeme anwenden, welche die Drosselklappe in Sonderbetriebszuständen einstellen. Ein solches Beispiel ist der Fahrgeschwindigkeitsregler. Dazu wird im Rahmen der Funktionsebene 12 die Fahrgeschwindigkeitsreglerfunktion und die Steuerung der Drosselklappe vorgenommen, während in der Überwachungsebene 14 die Überwachung des Fahrgeschwindigkeitsreglers durchgeführt wird. Dazu wird beispielsweise über die Überwachungsebene 14 das Bremssignal, der Aus-Schalter, die Fahrgeschwindigkeitsschwelle, etc. verarbeitet, während im Rahmen der Funktionsebene die Fahrgeschwindigkeitsregelkreise und Stellungsregelkreise berechnet werden.

Darüber hinaus ist die erfindungsgemäße Vorgehensweise auf alle die Steuersysteme für eine Antriebseinheit eines Fahrzeugs anwendbar, bei denen durch einen Vergleich der Vorgabe- und Ausgangssignale zur Steuerung der Leistung der Antriebseinheit eine Aussage über Fehlfunktionen gemacht werden kann.

Ferner kann in einem vorteilhaften Ausführungsbeispiel auf die Einbeziehung des Meßsignals des Sensors 202 in die Funktionsebene 12 verzichtet werden.

Anstelle der Port-Eingänge 210 kann zum Einlesen kontinuierlicher Signale ein weiterer Analog-/Digital-Wandler vorgesehen sein und so die Überwachung verfeinert werden.

Unter Ebenen werden Elemente einer Organisationstruktur im Rechenelement verstanden, die auf verschiedenen Hardwareund Softwareelementen aufgebaut sind und voneinander insoweit unabhängig sind, daß wenigstens zewi voneinander unabhängige Verarbeitungskanäle im Rechenelement entstehen.

## Patentansprüche

1. Verfahren zur Steuerung der Antriebseinheit eines Fahrzeugs,
mit einem Rechenelement (10),
- welches sowohl die Steuerung der Leistung der Antriebseinheit als auch die Überwachung dieser Leistungssteuerung durchführt,
- welches wenigstens zwei, sich zumindest außerhalb des Fehlerfalls gegenseitig nicht beeinflussende Programmebenen (12, 14) aufweist,
- wobei in einer ersten Ebene (12) wenigstens eine Steuergröße zur Steuerung der Leistung der Antriebseinheit zumindest in einem Betriebszustand des Fahrzeugs gebildet wird,
- in einer zweiten Ebene (14) anhand von ausgewählten Größen die korrekte Bildung der wenigstens einen Steuergröße in der ersten Ebene (12) überprüft wird,
- mit einem Watch-Dog-Element (38), welches mit dem Rechenelement (10) verbunden ist und welches ein Signal an das Rechenelement (10) abgibt und ein Antwortsignal vom Rechenelement (10) empfängt, wobei eine Fehlerreaktion eingeleitet wird, wenn das Antwortsignal dem erwarteten nicht entspricht,
dadurch gekennzeichnet, daß
- eine dritte Ebene (16) im Rechenelement (10) vorgesehen ist, die im Zusammenspiel mit dem Watch-Dog-Element (38) die korrekte Durchführung der Überwachung in der zweiten Ebene (14) überprüft.

2. Verfahren nach Anspruch 1, dadurch gekennzeichnet, daß die erste Ebene wenigstens zur elektrischen Steuerung einer Drosselklappe abhängig von Vorgabewerten dient.

3. Verfahren nach einem der vorhergehenden Ansprüche, dadurch gekennzeichnet, daß die zweite Ebene die Steuerfunktion zur Steuerung einer Drosselklappe durch Vergleich von Vorgabewerten und Einstellwerten der Leistung bzw. aus diesen abgeleiteten Werten überwacht.

4. Verfahren nach einem der vorhergehenden Ansprüche, dadurch gekennzeichnet, daß die auszuwertenden Größen der ersten Ebene und der zweiten Ebene durch voneinander getrennte Eingänge des Mikrocomputers zugeführt werden und innerhalb des Mikrocomputers getrennt voneinander ausgewertet werden.

5. Verfahren nach einem der vorhergehenden Ansprüche, dadurch gekennzeichnet, daß der Watch-Dog eine vorgegebene Frage mittels eines Impulssignals mit zufällig ausgewählten Impulslängen stellt, anhand des Impulssignals vorgegebene Programmodule bzw. -teile ausgewählt werden und wenigstens zwei Zähler bei Start und bei Verlassen der ausgewählten Programmodule bzw. -teile unterschiedlich verändert werden, wobei nach Abschluß der Überprüfung anhand der Zählerstände ein Impulssignal mit aus den Zählerständen abgeleiteten Impulslängen abgegeben wird, anhand derer der Watch-Dog Fehlfunktionen durch Vergleich dieser Antwort mit seiner Frage feststellt.

6. Verfahren nach einem der vorhergehenden Ansprüche, dadurch gekennzeichnet, daß der Fahrerwunsch durch wenigstens zwei Stellungssensoren erfaßt wird, welche dem Mikrocomputer zugeführt werden, wobei der für die Funktion der Drosselklappensteuerung abhängig vom Fahrerwunsch auszuwertende Sensor lediglich der ersten Ebene zugeführt wird, während der der Überwachung dienende Sensor wenigstens der zweiten Ebene zugeführt wird.

7. Verfahren nach einem der vorhergehenden Ansprüche, dadurch gekennzeichnet, daß die zugeführten Informationen in der Funktionsebene und in der Sicherheitsebene durch voneinander unabhängige Programme bzw. Programmodule ausgewertet werden.

8. Vorrichtung zur Steuerung der Antriebseinheit eines Fahrzeugs,
mit einem Rechenelement (10), welches sowohl die Steuerung der Leistung der Antriebseinheit als auch die Überwachung dieser Leistungssteuerung durchführt,
- mit wenigstens zwei, sich zumindest außerhalb des Fehlerfalls gegenseitig nicht beeinflussende Programmebenen (12, 14),
- einer ersten Ebene (12), in der wenigstens eine Steuergröße zur Steuerung der Leistung der Antriebseinheit zumindest in einem Betriebszustand des Fahrzeugs gebildet wird,
- und einer zweiten Ebene (14), in der anhand von ausgewählten Größen die korrekte Bildung der wenigstens einen Steuergröße in der ersten Ebene (12) überprüft wird,
- mit einem Watch-Dog-Element (38), welches mit dem Rechenelement (10) verbunden ist und welches ein Signal an das Rechenelement (10) abgibt und ein Antwortsignal vom Rechenelement (10) empfängt, wobei eine Fehlerreaktion eingeleitet wird, wenn das Antwortsignal dem erwarteten nicht entspricht,
gekennzeichnet durch
- eine dritte Ebene (16) des Rechenelements (10) , die im Zusammenspiel mit dem Watch-Dog-Element (38) die korrekte Durchführung der Überwachung in der zweiten Ebene (14) überprüft.

## Claims

1. Method for controlling the drive unit of a vehicle,
having a computer element (10),
- which undertakes both the control of the drive unit power and the monitoring of this power control,
- which has at least two program levels (12, 14) which, at least outside the fault case, do not mutually influence one another,
- at least one control parameter being formed at a first level (12) for controlling the power of the drive unit in at least one operating condition of the vehicle,
- the correct formation of the at least one control parameter at the first level (12) being checked at a second level (14) using selected parameters,
- having a watchdog element (38) which is connected to the computer element (10) and which emits a signal to the computer element (10) and receives a reply signal from the computer element (10), a fault reaction being initiated if the reply signal does not correspond to that expected,
characterized in that
- a third level (16) is provided in the computer element (10), which third level (16), interacting with the watchdog element (38), checks the correct execution of the monitoring at the second level (14).

2. Method according to Claim 1, characterized in that the first level is at least used for the electrical control of a throttle plate as a function of specified values.

3. Method according to one of the preceding claims, characterized in that the second level monitors the control function for controlling a throttle plate by comparing the power values specified and the power values set or values derived from these values.

4. Method according to one of the preceding claims, characterized in that the first level and second level parameters to be evaluated are supplied through mutually separate inputs of the microcomputer and are evaluated separately from one another within the microcomputer.

5. Method according to one of the preceding claims, characterized in that the watchdog sets a specified question by means of a pulsed signal with pulse lengths selected by chance, in that specified program modules or parts are selected using the pulsed signal and in that at least two counters are changed differently on starting and on leaving the selected program modules or parts, a pulsed signal with pulse lengths derived from the counter readings being emitted after the conclusion of the check, using the counter readings, the watchdog using the pulse lengths derived to determine faulty functions by comparing this reply with the watchdog's question.

6. Method according to one of the preceding claims, characterized in that the driver's requirement is recorded by means of at least two position sensors, which are supplied to the microcomputer, the sensor to be evaluated for the function of the throttle plate control as a function of the driver's requirement being supplied only to the first level whereas the sensor used for monitoring is supplied to the second level at least.

7. Method according to one of the preceding claims, characterized in that the information supplied at the functional level and at the safety level is evaluated by mutually independent programs or program modules.

8. Appliance for controlling the drive unit of a vehicle,
having a computer element (10), which undertakes both the control of the drive unit power and the monitoring of this power control,
- having at least two program levels (12, 14) which, at least outside the fault case, do not mutually influence one another,
- a first level (12), in which at least one control parameter is formed for controlling the power of the drive unit in at least one operating condition of the vehicle,
- and a second level (14), in which the correct formation of the at least one control parameter at the first level (12) is checked using selected parameters,
- having a watchdog element (38) which is connected to the computer element (10) and which emits a signal to the computer element (10) and receives a reply signal from the computer element (10), a fault reaction being initiated if the reply signal does not correspond to that expected,
characterized by
- a third level (16) of the computer element (10), which third level (16), interacting with the watchdog element (38), checks the correct execution of the monitoring at the second level (14).

## Revendications

1. Procédé servant à commander l'unité d'entraînement d'un véhicule comprenant :
• un élément de calcul (10),
• qui effectue aussi bien la commande de puissance de l'unité d'entraînement que le contrôle de cette commande de puissance,
• avec au moins deux plans de programmes (12, 14) qui ne s'influencent pas mutuellement du moins en dehors du cas où se produit une erreur,
• dans lequel on forme dans un premier plan (12) au moins une grandeur de commande pour commander la puissance de l'unité d'entraînement au moins dans l'un des états de marche du véhicule,
• dans lequel on contrôle dans un deuxième plan (14), à partir de grandeurs sélectionnées, la formation correcte d'au moins une grandeur de commande dans le premier plan (12),
• avec un élément chien de garde (38), relié à l'élément de calcul (10) qui délivre un signal à l'élément de calcul (10) et reçoit un signal en réponse de l'élément de calcul (10), une réaction d'erreur étant introduite quand le signal de réponse ne correspond pas à ce que l'on attend,
caractérisé en ce qu'
on prévoit dans l'élément de calcul (10), un troisième plan (16) qui contrôle, en coopération avec l'élément chien de garde (38), le déroulement correct du contrôle dans le deuxième plan (14).

2. Procédé selon la revendication 1,
caractérisé en ce que
le premier plan sert au moins à commander électriquement un clapet d'étranglement en fonction de valeurs prédéfinies.

3. Procédé selon l'une des revendications précédentes,
caractérisé en ce que
le deuxième plan surveille la fonction de commande d'un clapet d'étranglement en comparant des valeurs prédéfinies et des valeurs de réglage de la puissance, où à partir de prélèvements de ces valeurs.

4. Procédé selon l'une des revendications précédentes,
caractérisé en ce que
les grandeurs à exploiter du premier plan et du deuxième plan sont amenées par des entrées distinctes les unes des autres du micro-ordinateur, et sont exploitées séparément les unes des autres à l'intérieur du micro-ordinateur.

5. Procédé selon l'une des revendications précédentes,
caractérisé en ce que
• le chien de garde pose une question prédéfinie au moyen d'un signal d'impulsion avec des impulsions de longueur sélectionnée au hasard,
• des modules de programme ou des parties de ces modules, prédéfinis à partir du signal d'impulsion, sont sélectionnés, et
• au moins deux compteurs sont modifiés de façon différente lors du démarrage ou de l'abandon des modules de programme ou des parties de modules de programme sélectionnés, un signal d'impulsion étant délivré avec des longueurs d'impulsion découlant des états du compteur, après la fin du contrôle, longueurs d'impulsion à partir desquelles le chien de garde détermine des fonctionnements entachés d'erreur, par comparaison entre cette réponse et la question.

6. Procédé selon l'une des revendications précédentes,
caractérisé en ce qu'
on détecte le souhait du conducteur par au moins deux détecteurs de position dont les signaux sont amenés à l'ordinateur, les signaux du détecteur à exploiter pour le fonctionnement de la commande du clapet d'étranglement en fonction du souhait du conducteur, étant amenés uniquement au premier plan, tandis que les signaux du détecteur qui servent au contrôle sont amenés au moins au deuxième plan.

7. Procédé selon l'une des revendications précédentes,
caractérisé en ce que
les informations amenées dans le plan de fonctionnement et dans le plan de sécurité sont exploitées par des programmes ou par des modules de programme indépendants les uns des autres.

8. Dispositif servant à commander l'unité d'entraînement d'un véhicule, comprenant :
• un élément de calcul (10) qui effectue aussi bien la commande de la puissance de l'unité d'entraînement que le contrôle de cette commande de la puissance,
• avec au moins deux plans de programmes (12, 14) qui ne s'influencent pas mutuellement du moins en dehors du cas où se produit une erreur,
• à savoir un premier plan (12) dans lequel on forme au moins une grandeur de commande pour commander la puissance de l'unité d'entraînement au moins dans l'un des états de marche du véhicule,
• et un deuxième plan (14) dans lequel on contrôle à partir de grandeurs sélectionnées la formation correcte d'au moins une grandeur de commande dans le premier plan (12),
• avec un élément chien de garde (38) relié à l'élément de calcul (10) qui délivre un signal à l'élément de calcul (10) et reçoit un signal en réponse de l'élément de calcul (10), une réaction d'erreur étant introduite quand le signal de réponse ne correspond pas à ce que l'on attend,
caractérisé en ce qu'
on prévoit dans l'élément de calcul (10), un troisième plan (16) qui contrôle, en coopération avec l'élément chien de garde (38), le déroulement correct du contrôle dans le deuxième plan (14).
